# EUROPEAN PATENT APPLICATION

(11) **EP 3 561 571 A1**
(43) Date of publication of application: **30.10.2019**
(21) Application number: 16925340.8
(22) Date of filing: 26.12.2016
(51) Int. Cl.: G02B 27/01

(54) **OPTICAL SYSTEM AND METHOD FOR ADJUSTING DIOPTER**

(71) Applicant: Shenzhen Royole Technologies Co., Ltd., Shenzhen, Guangdong 518172 (CN)
(72) Inventor: HE, Fang, Shenzhen Guangdong 518052 (CN)
(74) Representative: Mewburn Ellis LLP
(86) International application number: PCT/CN2016/112127
(87) International publication number: WO 2018/119583

(57) **Abstract**

An optical system and a method for adjusting diopter with the optical system are provided. The optical system includes an eyepiece (10), a half mirror (20), a display screen (30), a first stepping motor (40) coupling with the display screen (30), an image sensor (50), and an image analysis system (60) coupling with the display screen (30), the first stepping motor (40), and the image sensor (50). The eyepiece (10), the half mirror (20), and the display screen (30) are sequentially disposed along a first optical axis (70), and the half mirror (20) and the image sensor (50) are sequentially disposed along a second optical axis (80). The first stepping motor (40) controls the display screen (30) to move back and forth along the first optical axis (70). Light emitted by the display screen (30) enters an eye through the half mirror (20) and the eyepiece (10). Light reflected by the eye enters the image sensor (50) through the eyepiece (10) and the half mirror (20). The image sensor (50) converts reflected light signals into fundus images. The image analysis system (60) controls the first stepping motor (40) to adjust a distance between the display screen (30) and the half mirror (20) according to the fundus images, thereby precisely adjusting diopter by adopting the optical system.

## Description

### TECHNICAL FIELD

This disclosure relates to the field of an optical system, and more particularly to an optical system and a method for adjusting diopter.

### BACKGROUND

At present, diopter adjustment of virtual reality (VR) glasses on the market mainly adopts mechanical methods. For example, with a knob structure, a distance between a display screen and an eyepiece lens can be adjusted by turning a knob to adapt to users of different eyesights. Products such as HiSpot, Royole-x, Royole-moon, etc. adopt a mechanical focusing method to adjust diopter. Since operations of manually adjusting diopter are completely based on the users' subjective feeling, adjustment accuracy is difficult to guarantee.

### SUMMARY

The present disclosure aims to provide an optical system and a method for adjusting diopter to precisely adjust diopter.

In a first aspect of the present disclosure, an optical system is provided. The optical system includes an eyepiece, a half mirror, a display screen, a first stepping motor coupling with the display screen, an image sensor, and an image analysis system coupling with the display screen, the first stepping motor, and the image sensor. The eyepiece, the half mirror, and the display screen are sequentially disposed along a first optical axis. The half mirror and the image sensor are sequentially disposed along a second optical axis. The first stepping motor controls the display screen to move back and forth along the first optical axis. Light emitted by the display screen enters an eye through the half mirror and the eyepiece, and light reflected by the eye enters the image sensor through the eyepiece and the half mirror. The image sensor converts reflected light signals into fundus images and provides the fundus images to the image analysis system. The image analysis system controls the first stepping motor to adjust a distance between the display screen and the half mirror according to the fundus images.

In a second aspect of the present disclosure, a method for adjusting diopter is provided. The method is applicable to the optical system of the first aspect. The method includes the following. An image sensor is controlled to collect fundus images. A first stepping motor is controlled to adjust a distance between a display screen and a half mirror according to the fundus images.

In a third aspect of the present disclosure, a head-mounted display is provided. The head-mounted display includes the optical system of the first aspect.

Solution provided by the present disclosure is to adjust the distance between the display screen and the half mirror according to the fundus images obtained by the image sensor, so as to achieve the purpose of adjusting diopter. According to the solution provided by the present disclosure, it is unnecessary for a user to manually adjust diopter, which makes operations more convenient and diopter adjustment more accurate.

Theses aspects or other aspects of the present disclosure will be concise and easy to understand with reference to the following descriptions of implementations.

### BRIEF DESCRIPTION OF THE DRAWINGS

To describe technical solutions in implementations of the present disclosure or in the related art more clearly, the following briefly introduces the accompanying drawings required for describing the implementations or the related art. Apparently, the accompanying drawings in the following description illustrate merely some implementations of the present disclosure. Those of ordinary skill in the art may also obtain other drawings based on these accompanying drawings without creative efforts.
FIG. 1 is a schematic structural diagram illustrating an optical system according to an implementation of the present disclosure.
FIG. 2 is a schematic structural diagram illustrating an optical system according to another implementation of the present disclosure.
FIG. 3 is a schematic flow diagram illustrating a method for adjusting diopter according to an implementation of the present disclosure.
FIG. 4 is a schematic diagram illustrating a picture containing a white annular pattern according to an implementation of the present disclosure.

### DETAILED DESCRIPTION

For those skilled in the art to better understand technical solutions of the present disclosure, hereinafter, technical solutions embodied by the implementations of the present disclosure will be described in a clear and comprehensive manner with reference to the accompanying drawings intended for the implementations. It is evident that the implementations described herein constitute merely some rather than all of the implementations of the present disclosure, and that those of ordinary skill in the art will be able to derive other implementations based on these implementations without making creative efforts, and all such derived implementations shall all fall within the protection scope of the present disclosure.

The following will give a detailed description.

The terms "first", "second", "third", "fourth", and the like used in the specification, the claims, and the accompany drawings of the present disclosure are used to distinguish different objects rather than describe a particular order.

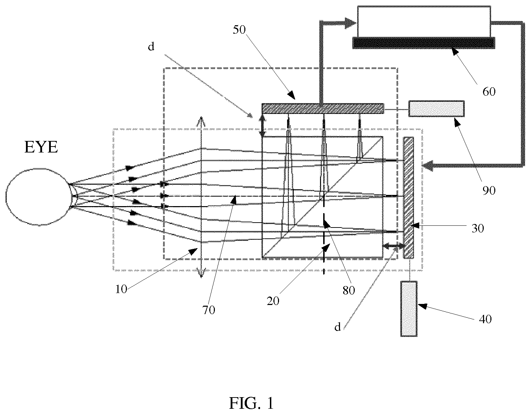

FIG. 1 is a schematic structural diagram illustrating an optical system according to an implementation of the present disclosure. As illustrated in FIG. 1, the optical system includes an eyepiece 10, a half mirror 20, a display screen 30, a first stepping motor 40 coupled with the display screen 30, an image sensor 50, and an image analysis system 60. The image analysis system 60 couples with the display screen 30, the first stepping motor 40, and the image sensor 50. The eyepiece 10, the half mirror 20, and the display screen 30 are sequentially disposed along a first optical axis 70. The half mirror 20 and the image sensor 50 are sequentially disposed along a second optical axis 80. The first stepping motor 40 is configured to control the display screen 30 to move back and forth along the first optical axis 70. Light emitted by the display screen 30 enters an eye through the half mirror 20 and the eyepiece 10. Light reflected by the eye enters the image sensor 50 through the eyepiece 10 and the half mirror 20. The image sensor converts light signals into fundus images and to provide the fundus images to the image analysis system 60. The image analysis system 60 is configured to control the first stepping motor 40 to adjust a distance between the display screen 30 and the half mirror 20 according to the fundus images, to achieve the purpose of adjusting diopter. It can be seen that, solution provided by the implementation of the present disclosure is to adjust the distance between the display screen and the half mirror according to the fundus images obtained by the image sensor, to achieve the purpose of adjusting diopter, making it unnecessary for the user to manually adjust diopter, which is convenient for operation and more accurate in adjusting diopter.

Refraction is a phenomenon in which light is deflected when it propagates through substances with different optical densities. The unit of measurement of the refraction is what we usually call "diopter".

In one implementation, the optical system further includes a second stepping motor 90 coupled with the image sensor 50 and the image analysis system 60. The second stepping motor 90 is configured to control the image sensor 50 to move back and forth along the second optical axis 80. When the image sensor 50 moves back and forth along the second optical axis 80, it indicates that the image sensor 50 moves toward or away from the half mirror 20.

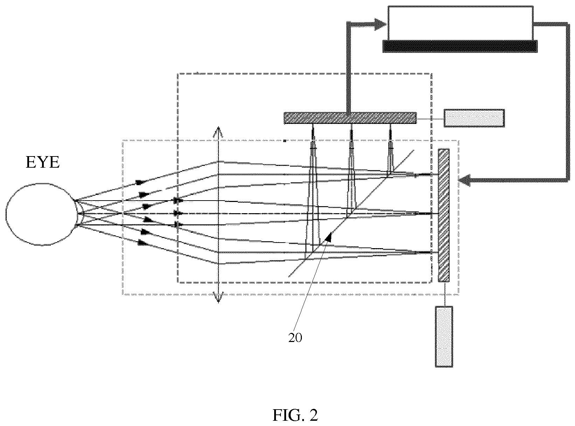

In one implementation, the half mirror 30 may include a beam splitter plate or a beam splitter prism. The beam splitter prism is illustrated in FIG. 1, which is formed when each bevel of two right-angle prisms is plated with a multilayer optical film and the two right-angle prisms are glued to form a cubic structure. The beam splitter plate is illustrated in FIG. 2.

In one implementation, the first optical axis 70 is perpendicular to the second optical axis 80.

The method for adjusting diopter provided by implementations of the present disclosure will be described in detail below with reference to the optical system illustrated in FIG. 1 and FIG. 2.

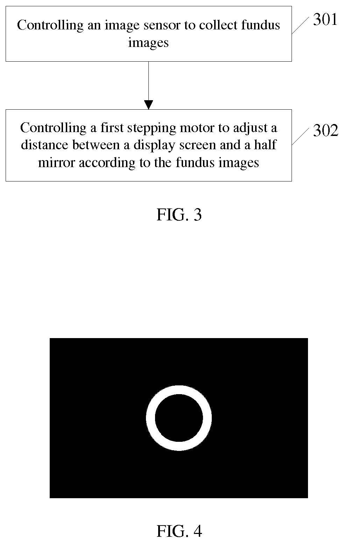

Referring to FIG. 3, FIG. 3 is a schematic flow diagram illustrating a method for adjusting diopter according to an implementation of the present disclosure. In the following, take an image analysis system 60 as an example of an execution subject for illustration. As illustrated in FIG. 3, the method includes following steps.

At S301, an image sensor 50 is controlled to collect fundus images.

In one implementation, the image sensor 50 is controlled to collect the fundus images at S301 as follows: a second stepping motor 90 is controlled to sequentially position the image sensor 50 at *N* positions, and *N* fundus images are obtained by controlling the image sensor 50 to collect one fundus image at each of the *N* positions. The *N* positions correspond to *N* different distances from the image sensor 50 to the half mirror 20, where *N* is an integer not less than 1 (that is, *N* is an integer greater than or equal to 1). The image sensor 50 at a first position is closer to the half mirror 20 than the image sensor 50 at an *N*^{th} position to the half mirror 20.

As an implementation, before adjusting diopter, the image analysis system 60 first controls the second stepping motor 90 to position the image sensor 50 at an initial position and controls a first stepping motor 40 to position a display screen 30 at an initial position. As illustrated in FIG. 1, the initial position of the display screen 30 refers to a position where a distance between the display screen 30 and a right surface of the half mirror 20 is *d,* and the initial position of the image sensor 50 refers to a position where a distance between the image sensor 50 and an upper surface of the half mirror 20 is also *d.* This parameter *d* (i.e., a distance) has been determined when the optical system is designed and the parameter *d* is equal to a back focal length of the optical system. Diopter is 0D when the display screen 30 is at the initial position, where D refers to one unit of diopter, and 1D is equal to 100 degrees of myopia. The serial number of a fundus image collected is represented by *N*. Specifically, the serial number of a first fundus image is 1, that is, *N*=1, the image sensor 50 is at a first position, where the distance between the image sensor 50 and the half mirror 20 is a first distance *s1,* and *s1*=dmm; the serial number of a second fundus image is 2, that is, *N*=2, the image sensor 50 is at a second position, where the distance between the image sensor 50 and the half mirror 20 is a second distance *s2*, and *s2*=*d*+*f*^{∗}*f*/2000 mm; the serial number of a third fundus image is 3, that is, *N*=3, the image sensor 50 is at a third position, where the distance between the image sensor 50 and the half mirror 20 is a third distance *s3,* where *s3*=*d*+2^{∗}*f*^{∗}*f*/2000mm; similarly, corresponding to an *N^{th}* fundus image, the distance between the image sensor 50 and the half mirror 20 is an *N^{th}* distance *s_{N},* and *s_{N}*=*d*+(*N*-1)^{∗}*f*^{∗}*f*/2000 mm. It should be noted that, a direction from the initial position toward the half mirror 20 is defined as a negative direction and a direction from the initial position away from the half mirror 20 is defined as a positive direction. The second stepping motor 90 operates in synchronization with the first stepping motor 40 such that the distance between the image sensor 50 and the half mirror 20 is equal to the distance between the display screen 30 and the half mirror 20.

At S302, the first stepping motor 40 is controlled to adjust a distance between the display screen 30 and the half mirror 20 according to the fundus images.

In one implementation, the first stepping motor 40 is controlled to adjust the distance between the display screen 30 and the half mirror 20 according to the fundus images at S302 as follows. Definitions of the *N* fundus images are obtained by analyzing the *N* fundus images. A fundus image with the highest definition is obtained from the *N* fundus images, and the fundus image with the highest definition is defined as a target fundus image. A target distance, corresponding to a position where the target fundus image is collected, from the image sensor 50 to the half mirror 20 is obtained. The distance between the display screen 30 and the half mirror 20 is adjusted to the target distance.

Specifically, a beam of light is projected onto fundus of an eye to-be-measured, and a position of a focus of a fundus image passing through a refractive system of the eye to-be-measured varies with refractive states of the eye to-be-measured. When a distance between the display screen 30 and an eyepiece 10 is constant, definitions of fundus images collected by the image sensor 50 at different positions are different, and thus diopter which matches the user's diopter can be determined according to the definitions of the fundus images. For example, if *N*=3, three fundus images can be collected and include a first image, a second image, and a third image. The first image is collected when the image sensor is at a first distance from the half mirror, the second image is collected when the image sensor is at a second distance from the half mirror, and the third image is collected when the image sensor is at a third distance from the half mirror. Assuming that the definition of the first image is higher than that of the second image and the definition of the second image is higher than that of the third image, diopter that best matches the user's diopter is when the distance between the image sensor 30 and the half mirror is the first distance. Accordingly, when the distance between the display screen 30 and the half mirror 20 is adjusted to the first distance, contents displayed on the display screen 30 and viewed by the eye of the user through the eyepiece is the clearest. That is to say, the image analysis system 60 controls the first stepping motor to adjust the distance between the display screen 30 and the half mirror 20 according to an obtained fundus image with the highest definition.

In one implementation, any two adjacent distances of the *N* different distances differ by *f*^{∗}*f*/2000 mm, where *f* is a focal length of the optical system.

In one implementation, before the image sensor is controlled to collect the fundus images, the method further includes following steps.

A picture for adjusting diopter is displayed on the display screen 30, where the picture for adjusting diopter contains a white annular pattern.

Since a reflectance of cornea of a human eye is much higher than that of any other part of the human eye, such a difference may cause a large amount of stray light when a fundus image is collected, thereby affecting the quality of the fundus image. In order to avoid the above problem, when the display screen 30 is used as a light source, a picture containing a white annular pattern as illustrated in FIG. 4, is displayed on the display screen 30 before the fundus images are collected, which aims to form an annular light source. The picture illustrated in FIG. 4 is black except for the white annular pattern locating in the middle of the picture.

In one implementation, since an adjustment range of a human eye in a non-mydriatic state (that is, a state of no mydriasis) is 4 mm to 7 mm, accordingly the white annular pattern has an inner diameter of 3 mm to 5 mm and an outer diameter larger than or equal to 7 mm.

Implementations of the present disclosure further provide a head-mounted display. The head-mounted display includes parts or all of the configurations of any of the optical system described in the above apparatus implementations.

Implementations of the present disclosure further provide a computer storage medium. The computer storage medium may be configured to store programs which, when executed, include parts or all of the operations of any of the method for adjusting diopter described in the above method implementations.

In summary, it should be noted that the preceding implementations are merely used for illustrating the technical solutions of the present disclosure rather than limiting the present disclosure. While the present disclosure has been described in detail in connection with the preceding implementations, it should be understood by those of ordinary skill in the art that modifications may still be made to the technical solutions disclosed in the various preceding implementations, or equivalent replacement may be made to a part of technical features thereof, but these modifications or alterations do not make the nature of corresponding technical solutions depart from the scope of the technical solutions of the various implementations of the present disclosure.

## Claims

1. An optical system, comprising:
an eyepiece;
a half mirror;
an image sensor;
a display screen;
a first stepping motor coupling with the display screen; and
an image analysis system coupling with the display screen, the first stepping motor, and the image sensor; wherein
the eyepiece, the half mirror, and the display screen are sequentially disposed along a first optical axis, the half mirror and the image sensor are sequentially disposed along a second optical axis, and the first stepping motor controls the display screen to move back and forth along the first optical axis; and
light emitted by the display screen enters an eye through the half mirror and the eyepiece, light reflected by the eye enters the image sensor through the eyepiece and the half mirror; the image sensor converts reflected light signals into fundus images and provides the fundus images to the image analysis system; and the image analysis system controls the first stepping motor to adjust a distance between the display screen and the half mirror according to the fundus images.

2. The optical system of claim 1, further comprising:
a second stepping motor, coupling with the image sensor and the image analysis system, and controlling the image sensor to move back and forth along the second optical axis.

3. The optical system of claim 1, wherein the half mirror comprises a beam splitter plate or a beam splitter prism.

4. The optical system of claim 1, wherein the first optical axis is perpendicular to the second optical axis.

5. A method for adjusting diopter, applicable to the optical system of any of claims 1 to 4, the method comprising:
controlling an image sensor to collect fundus images; and
controlling a first stepping motor to adjust a distance between a display screen and a half mirror according to the fundus images.

6. The method of claim 5, wherein the controlling the image sensor to collect the fundus images comprises:
controlling a second stepping motor to sequentially position the image sensor at *N* positions, and obtaining *N* fundus images by controlling the image sensor to collect one fundus image at each of the *N* positions, wherein the *N* positions correspond to *N* different distances from the image sensor to the half mirror, and *N* is an integer greater than or equal to 1.

7. The method of claim 6, wherein the controlling the first stepping motor to adjust the distance between the display screen and the half mirror according to the fundus images comprises:
obtaining definitions of the *N* fundus images by analyzing the *N* fundus images;
obtaining a fundus image with the highest definition from the *N* fundus images, and defining the fundus image with the highest definition as a target fundus image;
obtaining a target distance, corresponding to a position where the target fundus image is collected, between the image sensor and the half mirror; and
adjusting the distance between the display screen and the half mirror to the target distance.

8. The method of claim 6 or 7, wherein any two adjacent distances of the *N* different distances differ by *f*^{∗}*f*/2000 mm and *f* is a focal length of the optical system.

9. The method of claim 5, further comprising the following before controlling the image sensor to collect the fundus images:
displaying a picture for adjusting diopter on the display screen, wherein the picture for adjusting diopter contains a white annular pattern.

10. The method of claim 9, wherein the white annular pattern has an inner diameter of 3mm to 5mm and an outer diameter larger than or equal to 7 mm.
